# EUROPÄISCHE PATENTSCHRIFT

(11) **EP 2 185 386 B1**
(45) Veröffentlichungstag und Bekanntmachung des Hinweises auf die Patenterteilung: **12.11.2014**
(21) Anmeldenummer: 08774812.5
(22) Anmeldetag: 07.07.2008
(51) Int. Cl.: B60R 21/0136, B60R 21/01, B60R 21/0134

(54) **STEUERGERÄT UND VERFAHREN ZUR ANSTEUERUNG VON PERSONENSCHUTZMITTELN**
CONTROL DEVICE AND METHOD FOR TRIGGERING PERSON PROTECTING MEANS
APPAREIL DE COMMANDE ET PROCÉDÉ D'EXCITATION DE MOYENS DE PROTECTION PERSONNELLE

(30) Priorität: 06.08.2007 DE 102007037086; 24.01.2008 DE 102008005991
(43) Veröffentlichungstag der Anmeldung: 19.05.2010
(73) Patentinhaber: Robert Bosch GmbH, 70442 Stuttgart (DE)
(72) Erfinder: EWERHART, Frank, 74248 Ellhofen (DE); MARCHTHALER, Reiner, 73333 Gingen (DE); KROENINGER, Mario, 77815 Buehl (DE)
(86) Internationale Anmeldenummer: PCT/EP2008/058737
(87) Internationale Veröffentlichungsnummer: WO 2009/019093

(56) Entgegenhaltungen:
- EP-A- 0 937 612
- DE-A1- 4 209 140

## Beschreibung

### Stand der Technik

Die Erfindung betrifft ein Steuergerät bzw. ein Verfahren zur Ansteuerung von Personenschutzmitteln nach der Gattung der unabhängigen Patentansprüche.

Aus GB 2404443 A ist bereits ein kapazitiver, flächiger Umfeldsensor bekannt. Dabei wird ausgenutzt, dass ein Objekt, das sich in den Erfassungsbereich des kapazitiven Sensors bewegt, zu einer Kapazitätsänderung des vom Umfeldsensor erfassten Kapazitätswerts kommt, indem eine Reihenschaltung auf der Kapazität zwischen Erde und Objekt und Objekt und Sensor gebildet wird.

Die EP 0 937 612 A befasst sich mit einem Sensorsystem zum Erkennen und Bewerten einer Kollision zwischen einem Fahrzeug und einem Objekt. Dabei wird ein Beschleunigungssensor, ein Sensor zur Erkennung einer Deformation sowie optional ein eine elektrostatische Kapazität erfassender Sensor eingesetzt. Ein Kapazitätssignal dieses Sensors wird verwendet, um zwischen einem Fußgänger und einem Hindernis als Kollisionsobjekt zu unterscheiden.

### Offenbarung der Erfindung

Das erfindungsgemäße Steuergerät bzw. das erfindungsgemäße Verfahren zur Ansteuerung von Personenschutzmitteln mit den Merkmalen der unabhängigen Patentansprüche haben demgegenüber den Vorteil, dass das nunmehr ein erstes Signal einer flächig messenden kapazitiven Umfeldsensorik und ein zweites Signal einer Kontaktsensorik derart miteinander kombiniert werden, dass daraus ein Ansteuersignal für die Personenschutzmittel erzeugt wird. Dabei ist entscheidend, dass die Signale der beiden Sensoriken getrennt ausgewertet werden. Es ist also eine zweipfadige Entscheidung vorgesehen. Möglich, aber nicht notwendig, ist hier auch eine hardwaremäßige Trennung vorzusehen, um eine erhöhte Sicherheit der Ansteuerungsentscheidung zu gewährleisten. Durch diese Kombination der Signale um das Ansteuersignal zu erzeugen, ist eine Verkürzung der Auslösezeit, die vor allem im Seitencrash aufgrund der praktisch nicht vorhandenen Knautschzone für eine rechtzeitige Airbagauslösung nützlich ist.

Andere Umfeldsensoriken, wie Radar-, Lidar- oder Ultraschallsensoren, haben gegenüber dem kapazitiven Sensor mit seiner flächenhaft ausgebildeten Sensorik den Nachteil, dass sie strahlenförmig messen und daher nicht so große Teile der Fahrzeugseite abdecken. Weiterhin ist in der Regel eine Messung bis zum Kontakt mit Radar-, Lidar- oder Ultraschallsensoren aufgrund des Messverfahrens, beispielsweise der Pulslaufzeit und aufgrund der Übersteuerung des Empfängers bei zu geringer Entfernung nicht möglich.

Kapazitiv bedeutet vorliegend, dass eine Kapazitätsänderung durch das in den Erfassungsbereich der Umfeldsensorik eindringende Objekt erfasst wird. Flächig bedeutet, dass ein beträchtlicher Teil, beispielsweise 10*10 cm ^2, eines Fahrzeugseitenteils zur Objekterfassung dienen. Eine Alternative ist die streifenförmige Ausprägung, beispielsweise 1m*1cm.

In einer vorteilhaften Weiterbildung ist es möglich, dass eine Auswerteelektronik der kapazitiven Umfeldsensorik in das Gehäuse der Kontaktsensorik, also beispielsweise einer Beschleunigungs- und/oder Drucksensorik, integriert wird. Der Vorteil hierbei sind geringere Kosten durch gemeinsame Nutzung der für Beschleunigungs- oder Drucksensorik schon vorhandenen Komponenten, beispielsweise Gehäusekommunikationsleitungen und -bausteine zur Kommunikation zwischen der Sensorik und dem Steuergerät. Auch Spannungsversorgungsleitungen und Bausteine können dann gemeinsam genutzt werden. In einer weiteren Integrationsstufe ist auch eine Integration der Auswerteschaltung der kapazitiven Sensorik in den Auswerte-ASIC des Beschleunigungs- oder Drucksensors denkbar. Dies würde zu einer weiteren Kostenverringerung führen. Damit sind drei Stufen der Integration denkbar:
1. Integration in das Sensorgehäuse: Hierbei würde ein zusätzlicher Auswerte-IC für die kapazitive Umfeldsensorik neben den heute schon verwendeten Auswerte-ICs für die ausgelagerte Beschleunigungssensierung auf die gleiche Leiterplatte aufgebracht. Dabei können Kosten für Gehäusebuchsenverkabelungen gegenüber der Verwendung von zwei separaten Gehäusen für die Sensoren gespart werden.
2. Neben dem mikromechanischen Sensorelement und dem dazugehörigen Auswerte-ASIC für die Beschleunigungsmessung wird ein weiterer Auswerte-ASIC für die Auswertung der kapazitiven Näherungssensorik in das Gehäuse eingebracht.
3. Eine Integration der Auswerteschaltung für die Signalauswertung des kapazitiven Näherungssensors in die Auswerteschaltung des bekannten kapazitiven Beschleunigungssensors. Diese höchste Form der Integration hat die größten Synergiepotentiale, da auch Teile der ASIC-Schaltung des Beschleunigungssensors mitgenutzt werden können. Die Lösungen 1 und 2 unterscheiden sich dadurch, dass bei der Lösung 1 eine separate Sensorchipeinheit in einem gemeinsamen Gehäuse aufgebracht ist und damit eine modulare Lösung vorliegt. Die Lösung 2 sieht das Gehäuse mit mehreren Auswerte-ASICs vor.

Ein Steuergerät ist vorliegend ein elektrisches Gerät, das die vorliegenden Sensorsignale auswertet und ein Ansteuersignal in Abhängigkeit von diesen Sensorsignalen erzeugt. Ansteuerung bedeutet dabei, dass die Personenschutzmittel, wie Airbags, Gurtstraffer, aber auch aktive Personenschutzmittel, wie Bremsen oder ein Fahrdynamiksystem aktiviert werden. Bei pyrotechnisch ausgebildeten Personenschutzmitteln, wie Airbags oder Gurtstraffern, wird dabei ein Zündelement bestromt und zur Explosion gebracht. Bei elektromotorisch ausgebildeten Personenschutzmitteln, wie ebenfalls dem Gurtstraffer, wird ein entsprechender Elektromotor betrieben.

Die Schnittstellen können hard- und/oder softwaremäßig ausgebildet sein. Dadurch ist es möglich, dass die Schnittstellen, beispielsweise auf einem Mikrocontroller im Steuergerät ausgebildet sind und damit Schnittstellen auch für Sensoriken innerhalb des Steuergeräts selbst dienen. Bei einer hardwaremäßigen Ausbildung sind Kombinationen aus integrierten und diskreten Schaltungen, je nach Bedarf, möglich.

Das erste Signal kann ein einziges Signal, aber auch mehrere Signale beinhalten. Üblicherweise ist dieses Signal digital ausgebildet, da es auch auf eine Größe bezogen sein kann. Bei der flächig messenden kapazitiven Umfeldsensorik kann es sich um einen Kapazitätswert handeln, aber auch um einen bereits aus der Kapazität abgeleiteten Wert.

Auch das zweite Signal kann eine Mehrzahl von Einzelsignalen beinhalten. Auch hier kann das Signal auf einen anderen Wert bezogen sein und es kann bereits in der Kontaktsensorik eine Vorverarbeitung geschehen sein.

Wie aus den abhängigen Ansprüchen hervorgeht, kann die Kontaktsensorik beispielsweise als Beschleunigungssensorik und/oder als Luftdrucksensorik ausgebildet sein.

Die wenigstens eine Auswerteschaltung kann ein Prozessor, beispielsweise ein Mikrocontroller oder ein Dual-Core-Prozessor, aber auch ein ASIC oder aus diskreten Bauelementen aufgebaute Schaltung sein. Insbesondere kann die Auswerteschaltung mehrere Bereiche aufweisen, die getrennt voneinander Verarbeitungen durchführen. Dies erhöht die Sicherheit der Verarbeitung von Sensorsignalen. Die Auswertemodule können daher hard- und/oder softwaremäßig ausgebildet sein. Dies gilt ebenfalls für das Verknüpfungsmodul. Die Module kommunizieren als Softwaremodule gemäß dem Stand der Technik. Das dritte Ansteuersignal wird von der Auswerteschaltung zur Ansteuerschaltung übertragen, wobei die Ansteuerschaltung, die ebenfalls als integrierter Schaltkreis oder aus Kombinationen aus integrierten und diskreten Bauelementen bestehen kann, Leistungsschalter aufweist, die in Abhängigkeit von diesem dritten Ansteuersignal betätigt werden. Dabei werden mindestens zwei elektrisch steuerbare Leistungsschalter verwendet, es ist jedoch möglich, mehr als zwei solcher Leistungsschalter zu verwenden.

Üblicherweise sind die Schnittstellen, die Auswerteschaltung und die Ansteuerschaltung alle im Gehäuse des Steuergeräts vorhanden. Das Gehäuse ist üblicherweise aus Metall und/oder Kunststoff. Es ist jedoch möglich, ein Gehäuse aus einer Folie vorzusehen.

Durch die in den abhängigen Ansprüchen aufgeführten Maßnahmen und Weiterbildungen sind vorteilhafte Verbesserungen des in den unabhängigen Patentansprüchen angegebenen Steuergeräts bzw. Verfahrens zur Ansteuerung von Personenschutzmitteln möglich.

Es ist vorteilhaft, dass das zweite Signal wenigstens ein Beschleunigungssignal ausweist, so dass dann als die Kontaktsensorik eine Beschleunigungssensorik vorgesehen ist, die insbesondere in den B-Säulen oder in anderen Seitenbereichen des Fahrzeugs angeordnet ist. Beschleunigungssignale liefern zuverlässige Signale bezüglich eines Aufpralls.

Es ist weiterhin vorteilhaft, als das zweite Signal wenigstens ein Luftdrucksignal zu verwenden. Dies bedeutet, dass eine Luftdrucksensorik in einem Seitenteil des Fahrzeugs verwendet wird. Dabei wird ausgenutzt, dass bei einem Aufprall auf dieses Seitenteil es zu einer Komprimierung des Druckes in diesem Seitenteil kommt, die schnell erfassbar ist.

Es ist weiterhin vorteilhaft, dass die Auswertemodule wenigstens jeweils einen Schwellwertentscheider aufweisen. Damit kann durch eine Schwellwertentscheidung entschieden werden, ob das erste bzw. zweite Ansteuersignal erzeugt wird oder nicht. Alternativ ist es möglich, dass Klassifizierungen bzw. Mustererkennungen vorgenommen werden. Klassifizierungen sind insbesondere geeignet, wenn das zweite Signal mehr als ein Einzelsignal aufweist, so dass dann ein Vektor vorliegt, der beispielsweise einer bestimmten Klasse zugeordnet werden kann und dann in Abhängigkeit von dieser Klassifizierung entschieden wird, ob das Ansteuersignal erzeugt wird oder nicht

Vorteilhafter Weise weist das Verknüpfungsmodul eine logische Undverknüpfung auf. Alternativ ist es jedoch möglich, die Verknüpfung ebenfalls, beispielsweise als Klassifizierung auszugestalten. Auch eine Mustererkennung oder andere Verknüpfungsmethoden, die zu geeigneten Ergebnissen kommen, sind vorliegend möglich.

Bei den abgeleiteten Signalen für den Schwellwertvergleich bzw. die Klassifizierung bzw. die Mustererkennung kann es sich um integrierte ,mehrfach integrierte, abgeleitete, gefilterte, gemittelte oder anders verarbeitete Signale handeln.

Ausführungsbeispiele der Erfindung sind in der Zeichnung dargestellt und werden in der nachfolgenden Beschreibung näher erläutert.

### Es zeigen

Figur 1 ein Blockschaltbild einer Sensorkonfiguration mit Steuergerät im Fahrzeug,
Figur 2 ein Blockschaltbild des erfindungsgemäßen Steuergeräts mit angeschlossenen Komponenten,
Figur 3 ein erstes Signalablaufdiagramm zur Erläuterung des erfindungsgemäßen Verfahrens,
Figur 4 ein zweites Signalablaufdiagramm und
Figur 5 ein drittes Signalablaufdiagramm.

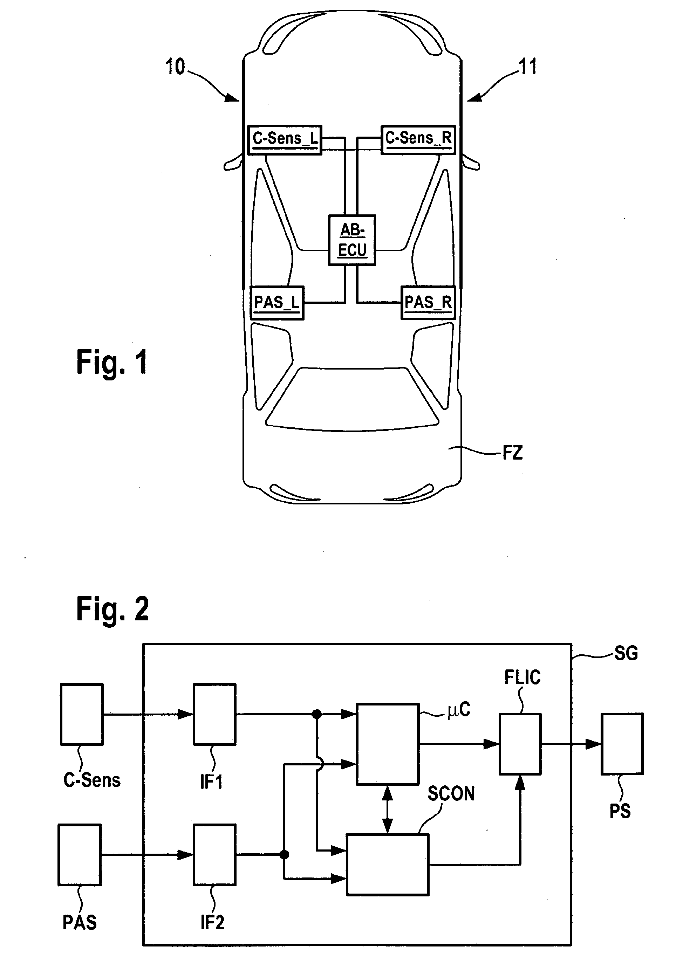

Figur 1 erläutert in einem Blockschaltbild wie die Kontaktsensorik und die kapazitiv flächig messende Umfeldsensorik im Fahrzeug angeordnet sein können und an das Steuergerät angeschlossen sind. Im Fahrzeug FZ ist eine Sensorelektrode 11 rechts am Fahrzeug angeordnet und eine Sensorelektrode links 10 gegenüber vorhanden. Diese Sensorelektroden werden gemäß dem Stand der Technik dazu verwendet, ein Objekt, das sich im Umfeld des Fahrzeugs FZ befindet, mittels einer Kapazitätsänderung zu detektieren, indem dieses Objekt mit der Erde und der Sensorelektrode eine Reihenschaltung von Kapazitäten bildet. Diese Sensorsignale werden dann an das Airbagsteuergerät AB-ECU von den Sensoren C-Sens_L und C-Sens_R versendet. Das Steuergerät AB-ECU erhält jedoch auch von ausgelagerten Beschleunigungssensoren PAS_L und PAS_R, die beispielsweise im Bereich der B-Säule angeordnet sind, Beschleunigungssignale, insbesondere in Fahrzeugquerrichtung.

Es ist weiterhin möglich, dass auch Luftdrucksensoren, die in den Seitenteilen des Fahrzeugs angeordnet sind, Signale an das Airbagsteuergerät AB-ECU übertragen.

Die Beschleunigungssensoren PAS_R und PAS_L weisen mikromechanisch hergestellte Beschleunigungssensormodule auf, die unter dem Einfluss einer Verzögerung einen elektrisch erfassbaren Parameter verändern, der dann als Messwert dem Airbagsteuergerät auch in einer abgewandelten Form übertragen wird. Für die Übertragung kann beispielsweise eine Modulation eines Ruhestroms verwendet werden. Auch eine Busverbindung ist vorliegend möglich, Es ist möglich, dass die Funktion eines Airbagsteuergeräts AB-ECU auf weitere Steuergeräte verteilt sind oder dass das Airbagsteuergerät AB-ECU in ein Sicherheitssteuergerät integriert ist, das auch aktive Personenschutzmittel wie Bremsen oder eine Fahrdynamikregelung ansteuern kann.

Die Einbauorte der Sensoren können innerhalb des fachmännischen Könnens und der Bedürfnisse variiert werden. Vorliegend, wie auch in den anderen Darstellungen, sind lediglich die für die Erfindung notwendigen Komponenten dargestellt. Andere für den Betrieb notwendigen Komponenten sind der Einfachheit halber weggelassen worden.

Figur 2 zeigt ein Blockschaltbild des erfindungsgemäßen Steuergeräts SG mit angeschlossenen Komponenten. Die flächig ausgebildete kapazitive Umfeldsensorik C-Sens liefert ein Signal an eine erste Schnittstelle IF1, die vorliegend als integrierter Schaltkreis ausgebildet ist. Die periphere Beschleunigungssensorik PAS liefert ihre Signale an eine zweite Schnittstelle IF2, die ebenfalls als integrierter Schaltkreis ausgebildet ist. Es ist möglich, dass die erste und die zweite Schnittstelle in einem einzigen integrierten Schaltkreis vereinigt sind. Die Signale werden von den Schnittstellen IF1 und IF2 in ein für den Mikrocontroller µC und dem Sicherheitsbaustein SCON lesbares Format umgewandelt, beispielsweise in das sogenannte SPI- (Serial Peripherial Interface Bus) Format. Sowohl der Mikrocontroller µC, als auch der Sicherheitsbaustein SCON werten die Sensorsignale der kapazitiven Umfeldsensorik und der Beschleunigungssensorik getrennt aus. Dafür werden, wie oben beschrieben, beispielsweise Schwellwertvergleiche auch mit adaptiven Schwellwerten Klassifizierungskonzepte und/oder Mustererkennungen verwendet. Der Sicherheitsbaustein SCON überwacht auch mit einer Watchdog-Einheit den Mikrocontroller µC.

Kommen beide Auswerteschaltungen, der Mikrocontroller µC und der Sicherheitsbaustein SCON zu dem Ergebnis, dass beide Sensorsignale die Ansteuerung der Personenschutzmittel notwendig machen, werden entsprechende Signale an die Ansteuerschaltung FLIC übertragen. Die Ansteuerschaltung FLIC weist eine Auswerteeinheit für die Signale des Mikrocontrollers µC und des Sicherheitshalbleiters SCON, sowie deren Verknüpfung auf und auch die elektrisch steuerbaren Leistungsschalter, die in Abhängigkeit von den Ansteuersignalen betätigt werden. Ist der Ansteuerfall von dem Mikrocontroller µC und dem Sicherheitsbaustein SCON getroffen worden, dann wird es zur Ansteuerung der Personenschutzmittel PS kommen.

Der Mikrocontroller µC und auch der Sicherheitsbaustein SCON weisen getrennte Auswertemodule für die einzelnen Sensorsignale auf. Auf dem Mikrocontroller µC sind dafür getrennte Softwaremodule ein erstes und ein zweites Auswertemodul vorgesehen. Der Sicherheitshalbleiter SCON weist dafür getrennte Schaltungen auf. Die Signale der Auswertemodule werden dann durch ein Verknüpfungsmodul verknüpft, um das eigentliche Ansteuersignal für die Ansteuerschaltung FLIC zu erzeugen. Beim Sicherheitshalbleiter SCON ist dies eine dritte Schaltung.

Auf dem Mikrocontroller µC befinden sich also als Softwaremodule das erste und das zweite Auswertemodul zur Auswertung der Signale der kapazitiv messenden Umfeldsensorik und der Kontaktsensorik PAS. Das Verknüpfungsmodul verknüpft die Ergebnisse dieser beiden Auswertemodule. Weitere Softwaremodule können auf dem Mikrocontroller µC vorhanden sein.

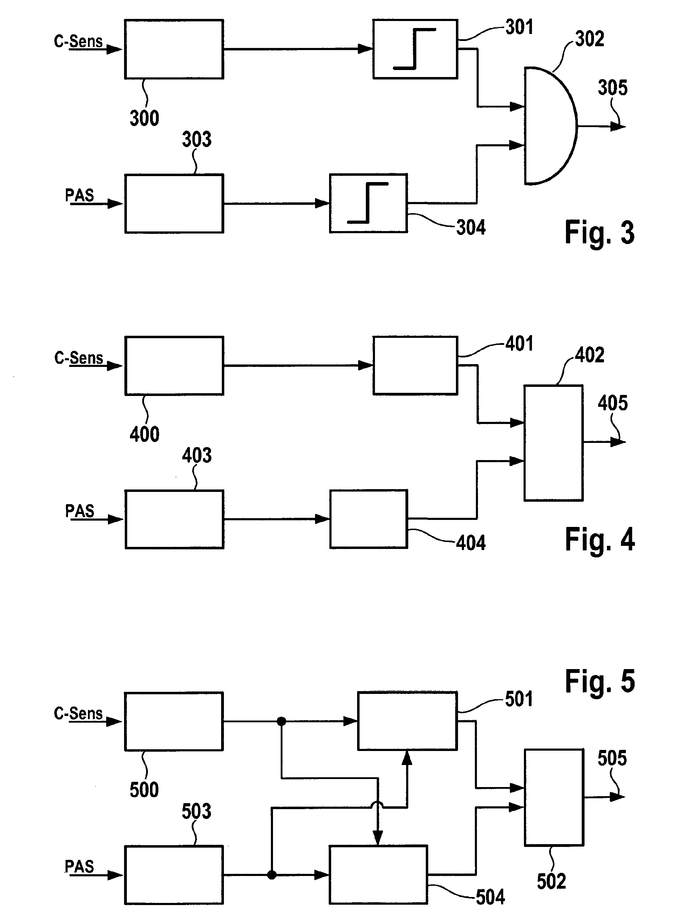

Figur 3 zeigt in einem ersten Signalablaufdiagramm das erfindungsgemäße Verfahren in einer ersten Ausprägung. Das Signal der kapazitiv messenden Umfeldsensorik C_Sens geht dabei in ein Glättungsmodul 300 ein. Dieses Glättungsmodul 300 führt die Glättung beispielsweise durch eine Tiefpassfilterung, durch eine Integration, durch eine Mittelwertbildung oder andere bekannte Maßnahmen zur Glättung des Signals durch. Das geglättete Signal geht dann in einen Schwellwertentscheider 301 ein. Dabei kann auch eine Vorverarbeitung, beispielsweise eine Integration usw. noch vorgesehen sein. Der Schwellwert des Schwellwertentscheiders 301 kann insbesondere adaptiv ausgebildet sein, d. h. er kann in Abhängigkeit vom zeitlichen Verhalten des Sensorsignals und/oder weiteren Sensorsignalen verändert werden. Kommt es zu einer zumindest dauerhaften Schwellwertüberschreitung, dann gibt der Schwellwertentscheider 301 diese Schwellwertüberschreitung kennzeichnendes Signal an das UND-Gatter 302 ab. Das UND-Gatter 302 bildet vorliegend das Vergleichsmodul. Das Signal der Kontaktsensorik, vorliegend ein Beschleunigungssignal, wird ebenfalls im Block 303 geglättet. Auch hier können die oben genannten Verfahren eingesetzt werden, wobei vorliegend die Integration verwendet wird. Das integrierte Beschleunigungssignal wird im Block 304 einem Schwellwertentscheider zugeführt, der ebenfalls einen adaptiv ausgebildeten Schwellwert ausweist. Das Ausgangssignal dieses Schwellwertentscheiders 304 geht ebenfalls in das UND-Gatter 302. Das UND-Gatter 302 verknüpft die beiden Ausgangssignale und nur wenn beide eine Ansteuerung anzeigen, wird das dritte Ansteuerungssignal 305 erzeugt.

Figur 4 zeigt ein weiteres Ausführungsbeispiel des erfindungsgemäßen Verfahrens. Wiederum wird das Signal der kapazitiv messenden Sensorik im Block 400, wie oben beschrieben, geglättet. Das geglättete Signal wird dann im Block 401 klassifiziert. Das Klassifizierungsergebnis wird im Block 402 zugeführt. Auch das Beschleunigungssignal wird im Block 403 wiederum, wie oben beschrieben, geglättet. Auch das Beschleunigungssignal wird im Block 404 klassifiziert. Dieses zweite Klassifizierungsergebnis wird dem Block 402 zugeführt, der aus den beiden Klassifizierungen eine weitere Klassifizierung vornimmt, die das dritte Ansteuersignal 405 bestimmt. Eine Verknüpfung der Ausführungsbeispiele gemäß Figur 3 und Figur 4 ist möglich. Auch eine Verknüpfung gemäß Figur 5, wie nachfolgend beschrieben, ist möglich.

Figur 5 zeigt ein drittes Ausführungsbeispiel des erfindungsgemäßen Verfahrens. Nunmehr wird das Signal der kapazitiv messenden Umfeldsensorik wiederum im Block 500 geglättet, um dann im Block 501 klassifiziert zu werden. Das geglättete Signal wird jedoch auch der Klassifizierung 504 zugeführt, in die das geglättete Beschleunigungssignal hineingeht, aus dem Glättungsmodul 503. Das geglättete Beschleunigungssignal wird jedoch auch der Klassifizierung 501 zugeführt. Damit ist eine wechselseitige Beeinflussung der beiden Auswertepfade gegeben. Es ist möglich, dies auch nur einseitig vorzusehen und dies mit anderen Ausführungsbeispielen gemäß Figur 3 und Figur 4 zu verknüpfen.

Block 502 führt wiederum eine Fusion der Klassifizierungen durch, so dass das dritte Ansteuersignal 505 gebildet wird.

## Patentansprüche

1. Steuergerät (SG) zur Ansteuerung von Personenschutzmittel (PS) eines Fahrzeugs mit:
- einer ersten Schnittstelle (IF1), die ein erstes Signal einer flächig messenden kapazitiven Umfeldsensorik (C_Sens) bereitstellt
- einer zweiten Schnittstelle (IF2), die ein zweites Signal einer Kontaktsensorik (PAS) bereitstellt
- mindestens einer Auswerteschaltung (µC), die ein erstes Auswertemodul aufweist, das in Abhängigkeit vom ersten Signal ein erstes Ansteuersignal erzeugt, die ein zweites Auswertemodul aufweist, das in Abhängigkeit vom zweiten Signal ein zweites Ansteuersignal erzeugt und die ein Verknüpfungsmodul aufweist, das in Abhängigkeit vom ersten und vom zweiten Ansteuersignal ein drittes Ansteuersignal erzeugt
- einer Ansteuerschaltung (FLIC), die in Abhängigkeit vom dritten Ansteuersignal die Personenschutzmittel (PS) ansteuert,
**dadurch gekennzeichnet, dass**
- das Verknüpfungsmodul eine logische UND-Verknüpfung aufweist und ausgebildet ist, um das erste Ansteuersignal und das zweite Ansteuersignal unter Verwendung der logischen UND-Verknüpfung zu verknüpfen, um das dritte Ansteuersignal zu erzeugen.

2. Steuergerät nach Anspruch 1, **dadurch gekennzeichnet, dass** das zweite Signal wenigstens ein Beschleunigungssignal aufweist.

3. Steuergerät nach Anspruch 1 oder 2, **dadurch gekennzeichnet, dass** das zweite Signal wenigstens ein Luftdrucksignal aufweist.

4. Steuergerät nach einem der vorhergehenden Ansprüche, **dadurch gekennzeichnet, dass** das erste und das zweite Auswertemodul jeweils einen Schwellwertentscheider aufweisen.

5. Verfahren zur Ansteuerung von Personenschutzmitteln eines Fahrzeugs mit folgenden Verfahrensschritten:
- Bereitstellen eines ersten Signals einer flächig messenden kapazitiven Umfeldsensorik
- Bereitstellen eines zweiten Signals einer Kontaktsensorik
- Erzeugen eines ersten Ansteuersignals in Abhängigkeit von dem ersten Signal
- Erzeugen eines zweiten Ansteuersignals in Abhängigkeit von dem zweiten Signal
- Erzeugen eines dritten Ansteuersignals in Abhängigkeit von einer Verknüpfung des ersten und des zweiten Ansteuersignals
- Ansteuern der Personenschutzmittel in Abhängigkeit von dem dritten Ansteuersignal
**dadurch gekennzeichnet, dass**
- als die Verknüpfung eine logische UND-Verknüpfung verwendet wird.

6. Verfahren nach Anspruch 5, **dadurch gekennzeichnet, dass** das erste Ansteuersignal durch wenigstens einen ersten Schwellwertvergleich des ersten Signals oder eines davon abgeleiteten dritten Signals erzeugt wird.

7. Verfahren nach Anspruch 5 oder 6, **dadurch gekennzeichnet, dass** das zweite Ansteuersignal durch wenigstens einen zweiten Schwellwertvergleich des zweiten Signals oder eines davon abgeleiteten vierten Signals erzeugt wird.

8. Verfahren nach Anspruch 5, **dadurch gekennzeichnet, dass** das erste Ansteuersignal erzeugt wird, indem das erste Signal über ein davon abgeleitetes fünftes Signal wenigstens einer Mustererkennung und/oder wenigstens einer Klassifizierung zugeführt wird.

## Claims

1. Controller (SG) for activating personal protection means (PS) of a vehicle, having:
- a first interface (IF1) which makes available a first signal of a capacitive surroundings sensor system (C_Sens) which measures over an area,
- a second interface (IF2) which makes available a second signal of a contact sensor system (PAS),
- at least one evaluation circuit (µC), which has a first evaluation module which generates a first activation signal as a function of the first signal, which has a second evaluation module which generates a second activation signal as a function of the second signal, and which has a logic operation module which generates a third activation signal as a function of the first and second activation signals,
- an activation circuit (FLIC) which activates the personal protection means (PS) as a function of the third activation signal,
**characterized in that**
- the logic operation module has a logic AND logic operation and is designed to link the first activation signal and the second activation signal by using the logic AND logic operation, in order to generate the third activation signal.

2. Controller according to Claim 1, **characterized in that** the second signal has at least one acceleration signal.

3. Controller according to Claim 1 or 2, **characterized in that** the second signal has at least one air pressure signal.

4. Controller according to one of the preceding claims, **characterized in that** the first and second evaluation modules each have a threshold value decision device.

5. Method for activating personal protection means of a vehicle, having the following method steps:
- making available a first signal of a capacitive surroundings sensor system which measures over an area,
- making available a second signal of a contact sensor system,
- generating a first activation signal as a function of the first signal,
- generating a second activation signal as a function of the second signal,
- generating a third activation signal as a function of linking of the first and second activation signals,
- activating the personal protection means as a function of the third activation signal,
**characterized in that**
- a logic AND operation is used as the logic operation.

6. Method according to Claim 5, **characterized in that** the first activation signal is generated by at least one first threshold value comparison of the first signal or of a third signal derived therefrom.

7. Method according to Claim 5 or 6, **characterized in that** the second activation signal is generated by at least one second threshold value comparison of the second signal or of a fourth signal derived therefrom.

8. Method according to Claim 5, **characterized in that** the first activation signal is generated, the first signal being fed to at least one pattern recognition process and/or at least one classification process by means of a fifth signal derived therefrom.

## Revendications

1. Appareil de commande (SG) destiné à déclencher des moyens de protection des passagers (PS) d'un véhicule, comportant :
- une première interface (IF1) fournissant un premier signal de capteurs d'environnement capacitifs à mesure bidimensionnelle (C_Sens),
- une deuxième interface (IF2) fournissant un deuxième signal de capteurs de contact (PAS),
- au moins un circuit d'évaluation (µC) comprenant un premier module d'évaluation qui génère un premier signal de déclenchement en fonction du premier signal, comprenant un deuxième module d'évaluation qui génère un deuxième signal de déclenchement en fonction du deuxième signal et comprenant un module de combinaison qui génère un troisième signal de déclenchement en fonction des premier et deuxième signaux de déclenchement,
- un circuit de déclenchement (FLIC) commandant les moyens de protection des passagers (PS) en fonction du troisième signal de déclenchement,
**caractérisé en ce que**
- le module de combinaison comprend une combinaison ET logique et est conçu pour combiner le premier signal de déclenchement et le deuxième signal de déclenchement en utilisant la combinaison ET logique afin de générer le troisième signal de déclenchement.

2. Appareil de commande selon la revendication 1, **caractérisé en ce que** le deuxième signal comprend au moins un signal d'accélération.

3. Appareil de commande selon la revendication 1 ou 2, **caractérisé en ce que** le deuxième signal comprend au moins un signal de pression d'air.

4. Appareil de commande selon l'une quelconque des revendications précédentes, **caractérisé en ce que** les premier et deuxième modules d'évaluation comprennent respectivement un discriminateur à seuil.

5. Procédé de déclenchement de moyens de protection des passagers d'un véhicule, comportant les étapes de procédé consistant à :
- fournir un premier signal de capteurs d'environnement capacitifs à mesure bidimensionnelle,
- fournir un deuxième signal de capteurs de contact,
- générer un premier signal de déclenchement en fonction du premier signal,
- générer un deuxième signal de déclenchement en fonction du deuxième signal,
- générer un troisième signal de déclenchement en fonction d'une combinaison des premier et deuxième signaux de déclenchement,
- déclencher les moyens de protection des passagers en fonction du troisième signal de déclenchement, **caractérisé en ce que**
- on utilise en tant que combinaison une combinaison ET logique.

6. Procédé selon la revendication 5, **caractérisé en ce que** le premier signal de déclenchement est généré par au moins une première comparaison à une valeur de seuil du premier signal ou d'un troisième signal déduit de celui-ci.

7. Procédé selon la revendication 5 ou 6, **caractérisé en ce que** le deuxième signal de déclenchement est généré par au moins une deuxième comparaison à une valeur de seuil du deuxième signal ou d'un quatrième signal déduit de celui-ci.

8. Procédé selon la revendication 5, **caractérisé en ce que** le premier signal de déclenchement est généré en faisant en sorte que le premier signal soit délivré par l'intermédiaire d'un cinquième signal déduit de celui-ci par au moins une reconnaissance de forme et/ou d'au moins une classification.
